# EUROPEAN PATENT APPLICATION

(11) **EP 4 835 745 A1**
(43) Date of publication of application: **04.11.2026**
(21) Application number: 24918009.2
(22) Date of filing: 05.08.2024
(51) Int. Cl.: G06N 5/04

(54) **METHOD AND APPARATUS FOR INFERENCE IN LARGE LANGUAGE MODEL**

(30) Priority: 18.01.2024 CN 202410077095; 28.02.2024 CN 202410223760
(71) Applicant: Huawei Cloud Computing Technologies Co., Ltd., Gui'an New District, Guizhou 550025 (CN)
(72) Inventor: CHEN, Xusheng, Guiyang, Guizhou 550025 (CN); SHAN, Yizhou, Guiyang, Guizhou 550025 (CN); FENG, Hao, Guiyang, Guizhou 550025 (CN); ZHANG, Qin, Guiyang, Guizhou 550025 (CN); DENG, Xiaoyang, Guiyang, Guizhou 550025 (CN); DAN, Gengyuan, Guiyang, Guizhou 550025 (CN)
(74) Representative: Pfenning, Meinig & Partner mbB
(86) International application number: PCT/CN2024/109727
(87) International publication number: WO 2025/152397

(57) **Abstract**

Embodiments of this application disclose a large language model inference method and apparatus, to reduce bandwidth consumption of large language model inference. The method in embodiments of this application includes: A compute device obtains input data of a large language model running on a plurality of processors, where the input data includes input text of a user and reference information generated based on the input text, and the reference information includes domain-specific knowledge corresponding to the input text and time-sensitive information corresponding to the input text; performs matching with historical key-value cache data in a shared storage pool based on the input data, to determine key-value cache data corresponding to the input data, where the historical key-value cache data indicates intermediate data generated by the large language model when processing different historical input data, the shared storage pool is used to store the historical key-value cache data generated by the plurality of processors, and the different historical input data includes a historical input text and reference information corresponding to the historical input text; and generates, based on the key-value cache data, an output result corresponding to the input data.

## Description

This application claims priorities to Chinese Patent Application No. 202410077095.0, filed with the China National Intellectual Property Administration on January 18, 2024 and entitled "DATA PROCESSING METHOD AND APPARATUS, AND ANOTHER DEVICE", and to Chinese Patent Application No. 202410223760.2, filed with the China National Intellectual Property Administration on February 28, 2024 and entitled "LARGE LANGUAGE MODEL INFERENCE METHOD AND APPARATUS", both of which are incorporated herein by reference in their entireties.

### TECHNICAL FIELD

Embodiments of this application relate to the storage field, and in particular, to a large language model inference method and apparatus.

### BACKGROUND

With the development of machine learning and related technologies, large language models (large language models, LLMs) driven by machine learning have been widely applied. For example, large language models can automatically generate text or replies, and may be used in tasks such as machine translation, speech recognition, question answering, and dialog generation.

In the current large language model inference process, a compute device first preprocesses input text and then feeds the preprocessed data into a large language model. During preprocessing, the compute device may perform retrieval augmentation on the input text based on prompt engineering (prompt engineering), thereby obtaining reference information corresponding to the input text. The reference information obtained through retrieval augmentation includes more time-sensitive information. The compute device feeds both the input text and the corresponding reference information into the large language model, thereby improving the quality of the large language model's responses.

However, when the large language model processes input texts and reference information corresponding to different requests, the request sequence becomes longer, increasing computational workloads of the large language model during the prefill (Prefill) phase and leading to higher inference latency.

### SUMMARY

Embodiments of this application provide a large language model inference method. A compute device establishes a shared storage pool to store intermediate data obtained through prefill computation for different requests. The compute device can reuse the intermediate data in subsequent inference, thereby reducing computational workloads of the large language model and further lowering its inference latency. Embodiments of this application further provide a large language model inference apparatus, a compute device, a compute device cluster, a computer-readable storage medium, and a computer program product that correspond to the large language model inference method.

According to a first aspect, an embodiment of this application provides a large language model inference method. The method may be performed by a compute device, or may be performed by a component of the compute device, for example, a processor, a chip, or a chip system of the compute device, or may be implemented by a logical module or software that can implement all or some functions of the compute device. The method provided in the first aspect includes: The compute device obtains input data of a large language model running on a plurality of processors, where the input data includes input text of a user and reference information generated based on the input text, and the reference information includes domain-specific knowledge corresponding to the input text and time-sensitive information corresponding to the input text; the compute device performs matching with historical key-value cache data in a shared storage pool based on the input data, to determine key-value cache data corresponding to the input data, where the historical key-value cache data indicates intermediate data generated by the large language model when processing different historical input data, the shared storage pool is used to store the historical key-value cache data generated by the plurality of processors, and the different historical input data includes a historical input text and reference information corresponding to the historical input text; and the compute device generates, based on the key-value cache data, an output result corresponding to the input data.

In this embodiment of this application, the compute device can store, based on the shared storage pool, the intermediate data computed in an inference process of the historical input text, so that the compute device can reuse the intermediate data for next inference, thereby reducing computational workloads of the large language model and further lowering its inference latency.

In a possible implementation, in a process in which the compute device performs matching with the historical key-value cache data in the shared storage pool based on the input data, the compute device segments the input data to obtain segmented input data, and determines a universally unique identifier corresponding to the segmented input data; and the compute device performs matching with historical key-value cache data in the shared storage pool based on the universally unique identifier, to determine key-value cache data corresponding to the segmented input data.

In this embodiment of this application, the compute device can perform matching with the historical key-value cache data in the shared storage pool based on the universally unique identifier of the segmented input data, thereby improving matching efficiency of the key-value cache data, and further improving inference efficiency of the large language model.

In a possible implementation, the compute device performs prefix tree-based search on the segmented input data in the shared storage pool, to determine the key-value cache data corresponding to the segmented input data. Specifically, the compute device performs prefix matching with the key-value cache data in the shared storage based on the segmented input data, to first implement approximate matching. If the approximate matching succeeds, the compute device may further compute hash values for the segmented input data and the key-value cache data in the shared storage, and perform hash matching, to implement exact matching.

In this embodiment of this application, the compute device may also perform prefix tree-based search on the segmented input data, to determine the key-value cache data corresponding to the segmented input data, thereby improving matching accuracy of the input data.

In a possible implementation, in a process in which the compute device generates, based on the key-value cache data, the output result corresponding to the input data, the compute device concatenates the key-value cache data corresponding to the segmented input data, to generate full-segment key-value cache data corresponding to the input data; and the compute device processes, based on the large language model, the full-segment key-value cache data to generate the output result.

In this embodiment of this application, the compute device can concatenate the key-value cache data corresponding to the segmented input data, to generate the full-segment key-value cache data corresponding to the input data, thereby improving implementability of the solution.

In a possible implementation, in a process in which the compute device concatenates the segmented input data, the large language model may leave, as a blank, the key-value cache data that is not found in the shared storage pool in a first round of inference process, and use the blank as a missing token of the full-segment key-value cache data. In a subsequent inference process, the large language model fills the missing token based on the historical key-value cache data in the shared storage pool, or the large language model directly computes the missing token.

In this embodiment of this application, the compute device fills the missing token based on the historical key-value cache data in the shared storage pool, or computes the missing token based on the large language model, thereby improving richness of the solution.

In a possible implementation, the compute device may compute, by using a cost model, costs of searching shared cache data for key-value cache data and directly computing the key-value cache data in an inference process, to determine a manner of obtaining the key-value cache data. For example, in a process of filling the missing token, the compute device may compute, by using the cost model, costs of searching the shared storage pool for the historical key-value cache data to fill the missing token. If the costs of searching the shared storage pool for the historical key-value cache data to fill the missing token are higher than costs of directly computing the missing token based on filled key-value cache data, the compute device directly computes the missing token based on the filled key-value cache data.

In this embodiment of this application, the compute device may compute, by using the cost model, costs of obtaining the key-value cache data in different manners, to determine, based on the obtaining costs, the manner of obtaining the key-value cache data, thereby improving inference efficiency of the large language model.

In a possible implementation, when the historical key-value cache data is not found in the shared storage pool based on the input data, the compute device performs inference on the input data based on the large language model, to generate the key-value cache data corresponding to the input data; and the compute device stores the key-value cache data in the shared storage pool. Specifically, the compute device performs inference computation on the segmented input data, to generate key-value cache data corresponding to the segmented input data, and stores the key-value cache data in the shared storage pool.

In this embodiment of this application, when the historical key-value cache data is not found in the shared storage pool based on the input data, the compute device can perform inference on the input data based on the large language model to generate the key-value cache data corresponding to the input data, and store the key-value cache data in the shared storage pool for matching with key-value cache data of subsequent input data, thereby improving inference efficiency of the large language model.

In a possible implementation, before the compute device obtains the input data of the large language model, the compute device receives input text input by the user, where the input text includes a question text of the user. The compute device performs retrieval augmentation on the input text based on a prompt engineering system, to generate reference information corresponding to the input text, where the reference information can provide the large language model with domain-specific knowledge corresponding to the input text and time-sensitive information corresponding to the input text. Because reference information corresponding to different input texts may be the same, the reference information corresponding to the input text is duplicate with the reference information corresponding to the historical input text.

In this embodiment of this application, the compute device can perform retrieval augmentation on the input text based on the prompt engineering system, to generate the reference information corresponding to the input text, where the reference information can provide the large language model with the domain-specific knowledge corresponding to the input text and the time-sensitive information corresponding to the input text, thereby improving inference accuracy of the large language model.

In a possible implementation, the historical key-value cache data includes historical key-value cache data corresponding to historical input texts of different users, historical key-value cache data corresponding to historical input texts at different times, and historical key-value cache data corresponding to historical input texts in different sessions.

In this embodiment of this application, the historical key-value cache data in the shared storage pool includes the historical key value cache data corresponding to the historical input texts of the different users, the historical key-value cache data corresponding to the historical input texts at the different time, and the historical key-value cache data corresponding to the historical input texts in the different sessions, thereby implementing cross-user, cross-request, and cross-session reuse of the historical key-value cache data, and further improving inference efficiency of the large language model.

According to a second aspect, an embodiment of this application provides a large language model inference apparatus. The large language model inference apparatus includes an obtaining unit and a processing unit. The obtaining unit is configured to obtain input data of a large language model running on a plurality of processors, where the input data includes input text of a user and reference information generated based on the input text, and the reference information includes domain-specific knowledge corresponding to the input text and time-sensitive information corresponding to the input text. The processing unit is configured to perform matching with historical key-value cache data in a shared storage pool based on the input data, to determine key-value cache data corresponding to the input data, where the historical key-value cache data indicates intermediate data generated by the large language model when processing different historical input data, the shared storage pool is used to store the historical key-value cache data generated by the plurality of processors, and the different historical input data includes a historical input text and reference information corresponding to the historical input text. The processing unit is further configured to generate, based on the key-value cache data, an output result corresponding to the input data.

In a possible implementation, the processing unit is specifically configured to: segment the input data to obtain segmented input data, and determine a universally unique identifier corresponding to the segmented input data. The processing unit is specifically configured to perform matching with historical key-value cache data in the shared storage pool based on the universally unique identifier, to determine key-value cache data corresponding to the segmented input data.

In a possible implementation, the processing unit is specifically configured to: concatenate the key-value cache data corresponding to the segmented input data, to generate full-segment key-value cache data corresponding to the input data; and process, based on the large language model, the full-segment key-value cache data to generate the output result.

In a possible implementation, the full-segment key-value cache data includes a missing token, and the processing unit is further configured to: fill the missing token based on the historical key-value cache data in the shared storage pool, or compute the missing token based on the large language model.

In a possible implementation, the processing unit is further configured to: when the historical key-value cache data is not found in the shared storage pool based on the input data, perform inference on the input data based on the large language model, to generate the key-value cache data corresponding to the input data; and store the key-value cache data in the shared storage pool.

In a possible implementation, the historical key-value cache data includes historical key-value cache data corresponding to historical input texts of different users, historical key-value cache data corresponding to historical input texts at different times, and historical key-value cache data corresponding to historical input texts in different sessions.

According to a third aspect, an embodiment of this application provides a compute device. The compute device includes a processor, the processor is coupled to a memory, the processor is configured to store instructions, and when the instructions are executed by the processor, the compute device is enabled to perform the method according to any one of the first aspect or the possible implementations of the first aspect.

According to a fourth aspect, an embodiment of this application provides a compute device cluster. The compute device cluster includes one or more compute devices, the compute device includes a processor, the processor is coupled to a memory, the processor is configured to store instructions, and when the instructions are executed by the processor, the compute device cluster is enabled to perform the method according to any one of the first aspect or the possible implementations of the first aspect.

According to a fifth aspect, an embodiment of this application provides a computer-readable storage medium. The computer-readable storage medium stores instructions, and when the instructions are executed, a computer is enabled to perform the method according to any one of the first aspect or the possible implementations of the first aspect.

According to a sixth aspect, an embodiment of this application provides a computer program product. The computer program product includes instructions, and when the instructions are executed, a computer is enabled to implement the method according to any one of the first aspect or the possible implementations of the first aspect.

It may be understood that, for beneficial effects that can be achieved by any one of the foregoing large language model inference apparatus, compute device, compute device cluster, computer-readable medium, computer program product, or the like, refer to beneficial effects in a corresponding method. Details are not described herein again.

### BRIEF DESCRIPTION OF DRAWINGS

FIG. 1 is a diagram of a system architecture of a large language model inference system according to an embodiment of this application;
FIG. 2 is a schematic flowchart of a large language model inference method according to an embodiment of this application;
FIG. 3 is a schematic flowchart of another large language model inference method according to an embodiment of this application;
FIG. 4 is a schematic flowchart of another large language model inference method according to an embodiment of this application;
FIG. 5 is a diagram of a structure of a large language model inference apparatus according to an embodiment of this application;
FIG. 6 is a diagram of a structure of a compute device according to an embodiment of this application;
FIG. 7 is a diagram of a structure of a compute device cluster according to an embodiment of this application; and
FIG. 8 is a diagram of a structure of another compute device cluster according to an embodiment of this application.

### DESCRIPTION OF EMBODIMENTS

Embodiments of this application provide a large language model inference method and apparatus, to reduce inference latency in a large language model inference process.

In the specification, claims, and accompanying drawings of this application, the terms "first", "second", "third", "fourth", and the like (if existent) are intended to distinguish between similar objects but do not necessarily indicate a specific order or sequence. It should be understood that data termed in such a way is interchangeable in proper circumstances, so that embodiments described herein can be implemented in other orders than the order illustrated or described herein. In addition, the terms "include", "have", and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

First, some terms in embodiments of this application are described, to help a person skilled in the art understand the technical solutions.

Large language model (large language model, LLM): The large language model is a deep learning technology-based natural language processing model, is trained by using a large amount of text data, and has capabilities of understanding, generating, and processing a natural language. The large language model uses a natural language text as sequence data, such as a word sequence or a character sequence, and models statistical rules and potential semantic information of the sequence data by using a deep learning model. The large language model can perform a wide range of tasks, including text summarization, translation, sentiment analysis, question answering, dialog, and the like.

Prompt engineering (prompt engineering): Prompt engineering is a technology used to improve an input of a large language model. Prompt engineering adjusts an input prompt to guide the large language model to more accurately understand and answer related questions. For example, prompt engineering can optimize prompts, emphasize key information, reduce misunderstandings of the model for contexts, and provide task-specific guidance, to enable the model to better adapt to requirements of specific domains or tasks.

A token (token) is a minimum semantic unit obtained by performing word segmentation on a language, and may also be referred to as word segmentation, lexical marking, or the like. The token may be one or more Chinese characters, one English word, or half an English word. For example, " 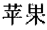 " is a token, " 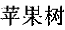 " can be two tokens " 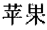 " + " 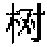 ", but " 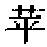 " alone does not indicate any meaning.

Context (context): The context refers to context information on which a large language model depends when processing a text, that is, a context environment on which the large language model depends when generating or understanding the text. For the large language model, the context can be a text, a dialog, a question, or any other form of text input.

To make the technical solutions of this application clearer and easier to understand, the following describes a system architecture of this application with reference to the accompanying drawings.

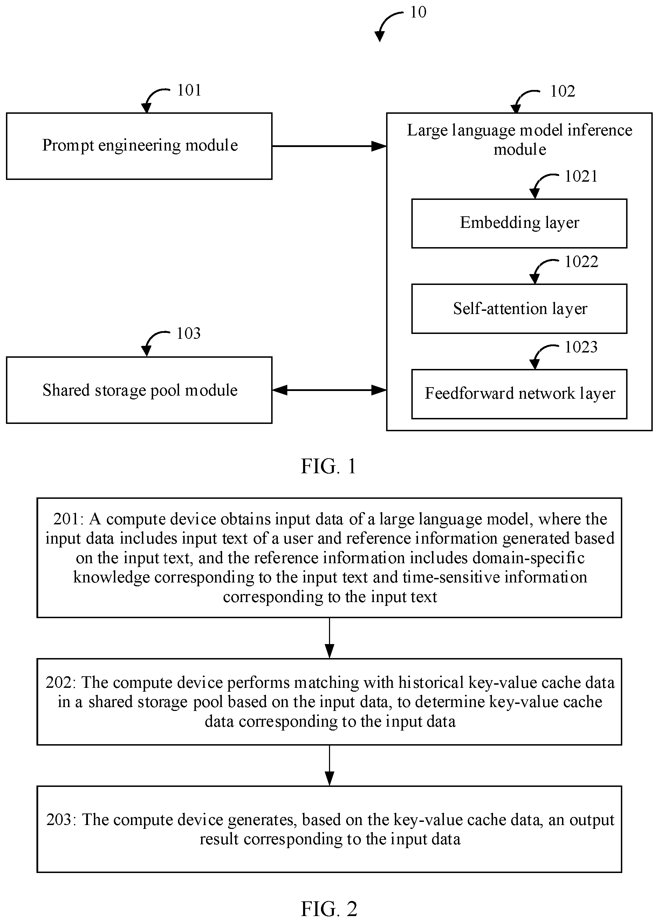

FIG. 1 is a diagram of a system architecture of a large language model inference system according to an example of this application. In the system architecture shown in FIG. 1, the large language model inference system 10 includes a prompt engineering module 101, a large language model inference module 102, and a shared storage pool module 103. The large language model inference module 102 includes an embedding layer 1021, a self-attention layer 1022, and a feedforward network layer 1023. The following describes in detail specific functions of the modules in the large language model inference system 10.

Prompt engineering module 101 is configured to: generate, based on input text of a user, reference information corresponding to the input text, and input the input text and the reference information into the large language model inference module 102, where the input text and the reference information may also be referred to as an augmented text. The prompt engineering module 101 stores domain-specific knowledge and time-sensitive information. Therefore, the prompt engineering module 101 can perform retrieval augmentation in the domain-specific knowledge and the time-sensitive information based on the input text, to obtain domain-specific knowledge corresponding to the input text and time-sensitive information corresponding to the input text.

It should be noted that, because domain-specific knowledge and time sensitivity of different input texts may be the same, retrieval augmentation may be performed on the different input texts to obtain same reference information, that is, reference information obtained by the prompt engineering module 101 by performing retrieval augmentation on the different input texts may overlap.

A large language model is built in the large language model inference module 102, and the large language model can perform inference computation on the input text and the reference information, to generate a corresponding output text. For example, the large language model inference module 102 may receive a natural language text as the input text, and the input text may be a sentence, a paragraph, or a longer text sequence. The large language model inference module 102 may perform inference computation on the input text and the reference information based on the large language model, to generate an output text. The output text may be a question answer, a text abstract, a translation result, or the like corresponding to the input text.

A model structure of the large language model built in the large language model inference module 102 is a multi-layer structure. For example, the multi-layer structure includes an embedding layer 1021, a self-attention layer 1022, and a feedforward network layer 1023. The embedding layer 1021 is configured to convert each token in the input text of the user and the reference information into a vector representation. The self-attention layer 1022 is configured to determine a context relationship between the input text and the reference information. For example, the self-attention layer 1022 performs self-attention computation on a vector representation corresponding to the input text and the reference information, to generate a context representation corresponding to the input text and the reference information. The feedforward network layer 1023 is configured to perform non-linear transformation after the self-attention layer 1022, extract high-level semantic features from the input text, and generate feature representations.

Inference phases of the large language model inference module 102 include a prefill (prefill) phase and a decode (decode) phase. The prefill phase is also referred to as a first token inference phase or a full inference phase. In the prefill phase, the compute device inputs the complete input text and the reference information into the large language model at a time for a first round of inference, to generate a first output token of the output text. The decode phase is also referred to as an incremental inference phase. In the decode phase, the compute device may continuously generate a next output token for the generated output text based on an autoregressive loop iteration.

The shared storage pool module 103 is configured to store key-value cache (KV cache) data generated by the large language model in an inference process, where the key-value cache data is intermediate data generated by the large language model in the inference process. Because the reference information obtained by the prompt engineering module 101 by performing retrieval augmentation on the different input texts may overlap, key-value cache data generated by the large language model for the different input texts in the inference process may also overlap. The large language model may reuse the key-value cache data, and the compute device may store the key-value cache data through the shared storage pool module 103.

It should be noted that the modules in the large language model inference system 10 may be deployed on a single compute device or a compute device cluster including a plurality of compute devices. This is not specifically limited.

Based on the large language model inference system 10 shown in FIG. 1, this application further provides a large language model inference method. The following describes, with reference to embodiments, large language model inference methods provided in embodiments of this application.

FIG. 2 is a schematic flowchart of a large language model inference method according to an embodiment of this application. In an example shown in FIG. 2, the method includes the following steps.

Step 201: A compute device obtains input data of a large language model, where the input data includes input text of a user and reference information generated based on the input text, and the reference information includes domain-specific knowledge corresponding to the input text and time-sensitive information corresponding to the input text.

The compute device obtains the input data of the large language model, where the input data includes the input text of the user and the reference information generated based on the input text, the input text is a text input by the user into the language model, for example, the input text may be a sentence or a paragraph of a question raised by the user, and the reference information is a text obtained by performing retrieval augmentation based on prompt engineering.

Specifically, the compute device receives the input text input by the user into the large language model, and performs augmentation on the input text of the user based on prompt engineering, to obtain the reference information of the input text. The input text of the user and the reference information corresponding to the input text are jointly used as the input data of the large language model. Because the input data is a text obtained by performing retrieval augmentation based on prompt engineering, the input data may also be referred to as an augmented text (augmented text).

It may be understood that, the input data obtained by performing augmentation based on prompt engineering includes the input text and the reference information corresponding to the input text, and the reference information can provide the large language model with domain-specific knowledge corresponding to the input text and time-sensitive information corresponding to the input text. In a process in which the compute device performs augmentation on the input text based on prompt engineering, reference information may be retrieved through a vector database (vector DB) component, a search engine component, or the like.

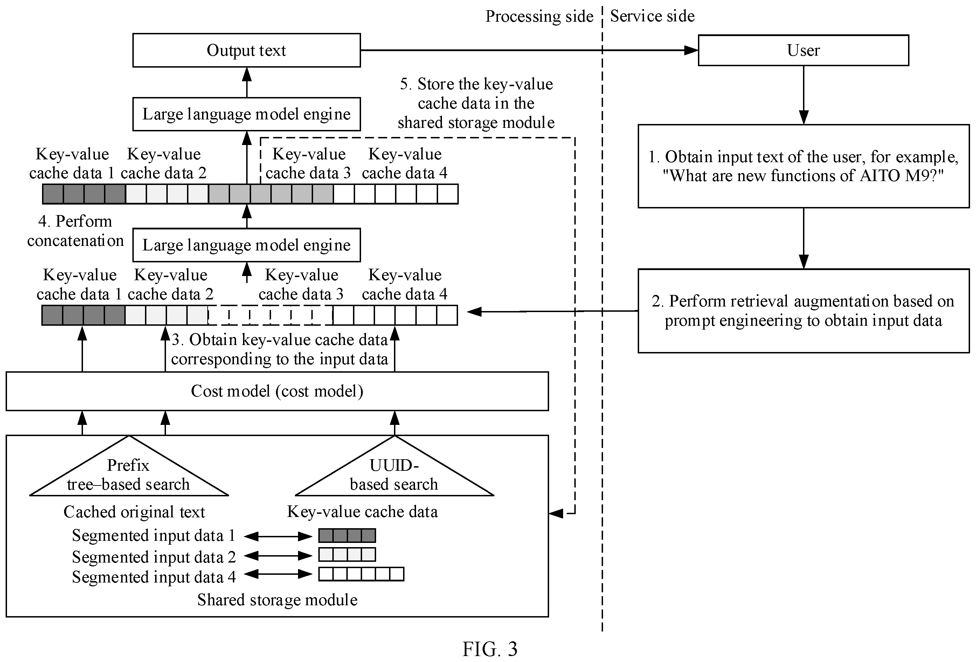

FIG. 3 is a schematic flowchart of a large language model inference method according to an embodiment of this application. In an example shown in FIG. 3, for input text of a user, for example, "What are new functions of AITO M9?", the compute device performs augmentation on the input text based on prompt engineering, to generate reference information for the input text, where the reference information includes, for example, time-sensitive information like "news about the launch event of AITO M9" and domain-specific knowledge like "user manual of AITO M9".

For another example, for input text of the user, for example, "What is the content of the launch event of AITO M9?", the compute device performs augmentation on the input text based on prompt engineering, to generate reference information for the input text, where the reference information includes, for example, time-sensitive information like "news about the launch event of AITO M9". For the two different input texts of the user: "What are new functions of AITO M9?" and "What is the content of the launch event of AITO M9?", the reference information generated by the compute device based on prompt engineering may overlap. For example, the prompt engineering module 101 may generate reference information for the two input texts from the time-sensitive information "news about the launch event of AITO M9".

In the example shown in FIG. 3, after generating the reference information of the input text, the compute device inputs the input text and the reference information as input data into the large language model.

In a possible implementation, in addition to the domain-specific knowledge corresponding to the input text and the time-sensitive information corresponding to the input text, the reference information further includes an instruction and an example of the large language model, where the instruction indicates an inference limitation and an inference requirement of the large language model, and the example indicates a format of an output text of the large language model.

Step 202: The compute device performs matching with historical key-value cache data in a shared storage pool based on the input data, to determine key-value cache data corresponding to the input data.

After obtaining the input data of the large language model, in a process of performing large language model inference, the compute device performs matching with the historical key-value cache data in the shared storage pool based on the input data, to determine the key-value cache data corresponding to the input data, where the historical key-value cache data is intermediate data generated by the large language model when processing different historical input data. The intermediate data is stored in the form of a multi-dimensional vector, and the shared storage pool may store the historical key-value cache data.

It should be noted that, when performing large language model inference, the compute device may also directly perform inference computation based on the input data, without the need to retrieve the key-value cache data from the shared storage pool. That is, the compute device processes the input data based on a multi-layer structure of the large language model to generate an output text corresponding to the input data, where the processing includes: converting the input data into a vector representation through an embedding layer, then mining and integrating key information in the vector representation through a self-attention layer, and performing further computation and optimization through a feedforward network layer, and finally converting the generated vector representation into an output text or the like.

In a possible implementation, in a process in which the compute device performs matching with the historical key-value cache data in the shared storage pool based on the input data, the compute device first segments the input data based on a segmentation algorithm, to obtain segmented input data, where the segmentation algorithm includes, for example, a segmentation algorithm based on a special character and an adaptive segmentation algorithm. After obtaining the segmented input data, the compute device matches the segmented input data with the historical key-value cache data in the shared storage pool, to determine key-value cache data corresponding to each piece of segmented input data. Specifically, the compute device needs to first convert the segmented input data into a vector identifier, and performs matching with the historical key-value cache data in the shared storage pool based on the vector representation corresponding to the segmented input data.

Still refer to FIG. 3. In the example shown in FIG. 3, after the compute device receives the input data, the large language model performs inference computation based on the input data. In a process in which the large language model performs inference computation, the compute device first segments the input data based on a segmentation algorithm to obtain segmented input data, and converts the segmented input data into a vector representation. Then, the large language model performs multi-round inference computation based on the converted vector representation, including computation of a plurality of transmission layers such as a self-attention layer and a feedforward network layer, and finally generates an output text corresponding to the input data.

In the example shown in FIG. 3, in each round of inference computation, the large language model may search the shared storage pool for matching the historical key-value cache data based on a vector representation corresponding to the segmented input data. If the shared storage pool includes the historical key-value cache data corresponding to the segmented input data, the large language model does not need to perform inference computation again based on the vector representation of the segmented input data, but directly obtains corresponding key-value cache data from the shared storage pool for a next round of inference computation, thereby improving inference efficiency.

In a possible implementation, when the historical key-value cache data is not found in the shared storage pool based on the input data, the compute device performs inference on the input data based on the large language model, to generate the key-value cache data corresponding to the input data; and stores the key-value cache data in the shared storage pool. Specifically, the compute device performs inference computation on the segmented input data, to generate key-value cache data corresponding to the segmented input data, and stores the key-value cache data in the shared storage pool.

Still refer to FIG. 3. In the example shown in FIG. 3, if the shared storage pool does not include the historical key-value cache data corresponding to the segmented input data, the large language model may perform inference computation based on the segmented input data, to obtain key-value cache data corresponding to the segmented input data, and store the key-value cache data corresponding to the segmented input data in the shared storage pool.

It should be noted that the historical key-value cache data stored in the shared storage pool includes historical key-value cache data corresponding to historical input texts of different users, historical key-value cache data corresponding to historical input texts at different times, and historical key-value cache data corresponding to historical input texts in different sessions. Because the historical key-value cache data corresponding to the historical input texts of the different users, the historical key-value cache data corresponding to the historical input texts at the different time, and the historical key-value cache data corresponding to the historical input texts in the different sessions may be duplicate, a deduplication operation needs to be performed on the key-value cache data stored in the shared storage pool.

For example, the historical key-value cache data corresponding to the historical input texts of the different users includes, for example, key-value cache data generated based on input text of a user A and an augmented text and key-value cache data generated based on input text of a user B and an augmented text. For example, the historical key-value cache data corresponding to the historical input texts at the different time includes, for example, key-value cache data generated based on input text of a user at 09:50:00 on January 19, 2024 and key-value cache data generated based on input text of the user at 09:57:00 on January 19, 2024. The historical key-value cache data corresponding to the historical input texts in the different sessions includes, for example, key-value cache data corresponding to input text of a question raised by a user in a first session and key-value cache data corresponding to input text of a question raised by the user in a second session.

In a possible implementation, after obtaining the segmented input data, the compute device further determines a universally unique identifier (universally unique identifier, UUID) corresponding to the segmented input data, and performs matching with historical key-value cache data in the shared storage pool based on the universally unique identifier, to determine key-value cache data corresponding to the segmented input data.

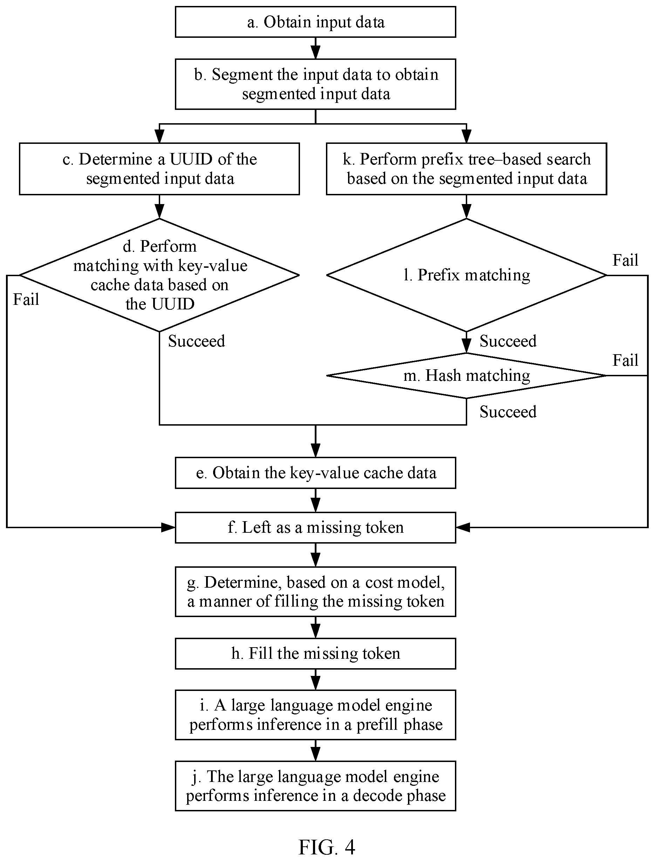

FIG. 4 is a schematic flowchart of another large language model inference method according to an embodiment of this application. In step a to step f shown in FIG. 4, after obtaining input data, a large language model segments the input data to obtain segmented input data, and further determines a universally unique identifier corresponding to the segmented input data. The compute device performs matching with key-value cache data in a shared storage pool based on the universally unique identifier; and if the key-value cache data is found, reads the key-value cache data from the shared storage pool, or if the key-value cache data is not found, leaves a position corresponding to the segmented input data as a missing token for a next round of inference.

In a possible implementation, the compute device may also perform prefix tree-based search on the segmented input data, to determine the key-value cache data corresponding to the segmented input data. Specifically, the compute device performs prefix matching with the key-value cache data in the shared storage based on the segmented input data, to implement approximate matching. If the matching succeeds, the compute device may further perform hash matching on the segmented input data and the key-value cache data in the shared storage, to implement exact matching.

Still refer to FIG. 3. In the example shown in FIG. 3, the large language model searches the shared storage pool for the historical key-value cache data through matching, and may index the historical key-value cache data based on a universally unique identifier UUID of the segmented input data, or may perform prefix tree-based search in the shared storage pool based on a vector representation corresponding to the segmented input data.

For example, when the input data is the input text "What are new functions of AITO M9?" and the reference information "news about the launch event of AITO M9" and "user manual of AITO M9", in a process in which the large language model performs inference based on the input data, the large language model segments the input data, and performs matching with the historical key-value cache data in the shared storage pool based on the vector representation corresponding to the segmented input data. For example, the large language model finds "key-value cache data 1" in the shared storage pool based on "segmented input data 1", and an output text corresponding to the key-value cache data 1 is, for example, a piece of "content introducing technical specifications of AITO M9".

Still refer to FIG. 4. In step k to step m and step e and step f shown in FIG. 4, after the large language model segments the input data to obtain the segmented input data, the compute device may also directly perform matching with key-value cache data in the shared storage pool based on the vector representation corresponding to the segmented input data. Specifically, the compute device may also perform prefix matching with the historical key-value cache data in the shared storage pool based on the vector representation corresponding to the segmented input data. If the prefix matching succeeds, it indicates that the shared storage pool includes key-value cache data that approximately matches the segmented input data. The compute device further performs hash matching on the approximately matched key-value cache data, that is, matches hash values of the segmented input data and the approximately matched key-value cache data. If the hash matching succeeds, the compute device reads a successfully matched key-value cache data from the shared storage pool. If the prefix matching or the hash matching fails, the compute device leaves a position corresponding to the segmented input data as a missing token for a next round of inference.

Step 203: The compute device generates, based on the key-value cache data, an output result corresponding to the input data.

The compute device generates, based on the key-value cache data, the output result corresponding to the input data. Specifically, after obtaining key-value cache data corresponding to each piece of segmented input data, the compute device concatenates the key-value cache data corresponding to the segmented input data, to generate full-segment key-value cache data corresponding to the input data, and processes, based on the large language model, the full-segment key-value cache data to generate the output result.

Still refer to FIG. 3. In the example shown in FIG. 3, after obtaining the key-value cache data of the segmented input data, the compute device concatenates the key-value cache data corresponding to the segmented input data, to obtain full-segment key-value cache data corresponding to the input data. For example, the compute device concatenates key-value cache data 1, key-value cache data 2, key-value cache data 3, and key-value cache data 4, and performs inference computation on the concatenated full-segment key-value cache data to generate an output text.

In a possible implementation, in a process in which the compute device concatenates the segmented input data, the large language model may leave, as a blank, the key-value cache data that is not found in the shared storage pool in a first round of inference process, and use the blank as a missing token of the full-segment key-value cache data. In a subsequent inference process, the large language model fills the missing token based on the historical key-value cache data in the shared storage pool, or the large language model directly computes the missing token.

It may be understood that the compute device may compute, by using a cost model (cost model), costs of searching shared cache data for key-value cache data and directly computing the key-value cache data in an inference process, to determine a manner of obtaining the key-value cache data. For example, in a process of filling the missing token, the compute device may compute, by using the cost model, costs of searching the shared storage pool for the historical key-value cache data to fill the missing token and costs of directly computing the missing token based on the filled key-value cache data, to determine a manner of filling the missing token.

Still refer to FIG. 3. In the example shown in FIG. 3, in a first round of inference process, the large language model concatenates key-value cache data corresponding to the segmented input data, resulting in some missing tokens. For example, the large language model obtains key-value cache data 1, key-value cache data 2, and key-value cache data 4 from the shared storage pool, and concatenates the key-value cache data 1, the key-value cache data 2, and the key-value cache data 4, where there are missing tokens between the key-value cache data 2 and the key-value cache data 4. The large language model needs to fill the missing tokens in a next round of inference computation.

In the example shown in FIG. 3, the large language model obtains, in a next round of inference computation, key-value cache data 3 corresponding to the missing tokens. The compute device may perform retrieval in the shared storage to obtain the key-value cache data 3, or may perform inference computation based on the key-value cache data 1 and the key-value cache data 2 to obtain the key-value cache data 3. This is not specifically limited.

Still refer to FIG. 4. In step g to step j in the example shown in FIG. 4, in a process of a next round of inference computation, the large language model determines, based on a cost model, a manner of filling a missing token. The compute device may search the shared storage pool for the historical key-value cache data to fill the missing token, or directly compute the missing token based on the filled key-value cache data. After filling the missing token, the compute device may perform inference in next steps based on the large language model engine, including inference in a prefill phase and inference in a decode phase.

It should be noted that, when directly computing the missing token based on the filled key-value cache data, the compute device computes the missing token only based on the key-value cache data before the missing token. In addition, when computing the missing token, the compute device may pre-load the key-value cache data after the missing token in parallel. This is not specifically limited.

Still refer to FIG. 3. In the example shown in FIG. 3, when filling the key-value cache data 3 corresponding to the missing tokens, the large language model may pre-load the key-value cache data 4 after the missing tokens. However, the large language model performs inference computation only based on the key-value cache data 1 and the key-value cache data 2 to obtain the key-value cache data 3.

It can be learned from the foregoing embodiments that, in this embodiment of this application, the compute device can store, based on the shared storage pool, the intermediate data computed in an inference process of the historical input text. Because the intermediate data corresponding to the input text of the user is duplicate with the intermediate data corresponding to the historical input text, the compute device can reuse the intermediate data for next inference, thereby reducing computational workloads of the large language model and lowering its inference latency.

Based on the foregoing method embodiments, an embodiment of this application further provides a large language model inference apparatus. The following describes in detail the large language model inference apparatus provided in embodiments of this application.

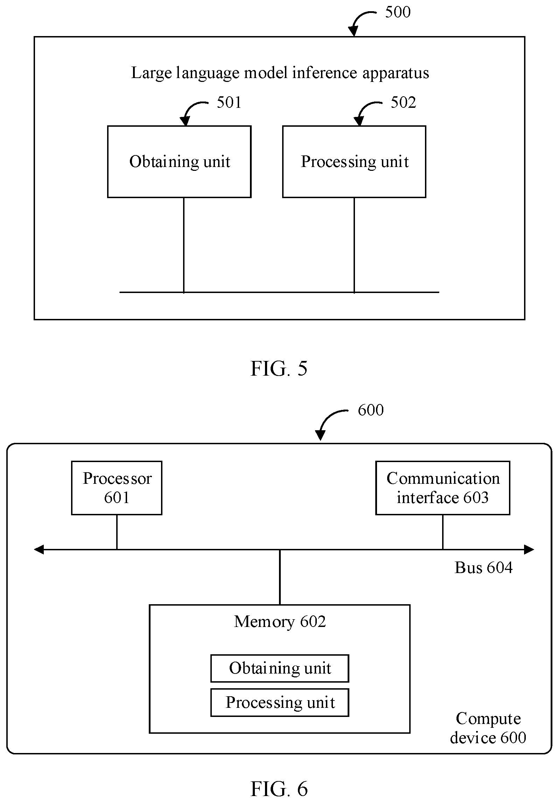

FIG. 5 is a diagram of a structure of a large language model inference apparatus according to an embodiment of this application. In the example shown in FIG. 5, the large language model inference apparatus 500 is configured to implement steps performed by a terminal-side sharing module in the foregoing embodiments. The large language model inference apparatus 500 includes an obtaining unit 501 and a processing unit 502.

The obtaining unit 501 is configured to obtain input data of a large language model running on a plurality of processors, where the input data includes input text of a user and reference information generated based on the input text, and the reference information includes domain-specific knowledge corresponding to the input text and time-sensitive information corresponding to the input text. The processing unit 502 is configured to perform matching with historical key-value cache data in a shared storage pool based on the input data, to determine key-value cache data corresponding to the input data, where the historical key-value cache data indicates intermediate data generated by the large language model when processing different historical input data, the shared storage pool is used to store the historical key-value cache data generated by the plurality of processors, and the different historical input data includes a historical input text and reference information corresponding to the historical input text. The processing unit 502 is further configured to generate, based on the key-value cache data, an output result corresponding to the input data.

In a possible implementation, the processing unit 502 is specifically configured to: segment the input data to obtain segmented input data, and determine a universally unique identifier corresponding to the segmented input data. The processing unit 502 is specifically configured to perform matching with historical key-value cache data in the shared storage pool based on the universally unique identifier, to determine key-value cache data corresponding to the segmented input data.

In a possible implementation, the processing unit 502 is specifically configured to: concatenate the key-value cache data corresponding to the segmented input data, to generate full-segment key-value cache data corresponding to the input data; and process, based on the large language model, the full-segment key-value cache data to generate the output result.

In a possible implementation, the full-segment key-value cache data includes a missing token, and the processing unit 502 is further configured to: fill the missing token based on the historical key-value cache data in the shared storage pool, or compute the missing token based on the large language model.

In a possible implementation, the processing unit 502 is further configured to: when the historical key-value cache data is not found in the shared storage pool based on the input data, perform inference on the input data based on the large language model, to generate the key-value cache data corresponding to the input data; and store the key-value cache data in the shared storage pool.

In a possible implementation, the historical key-value cache data includes historical key-value cache data corresponding to historical input texts of different users, historical key-value cache data corresponding to historical input texts at different times, and historical key-value cache data corresponding to historical input texts in different sessions.

It may be understood that, the obtaining unit 501 and the processing unit 502 in the large language model inference apparatus 500 may be used as functional modules and are mapped to the modules in the large language model inference system 10 in FIG. 1, to implement functions of the modules in the large language model inference system 10.

It should be understood that division into the units in the foregoing apparatus is merely logical function division. In an actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in a form of software invoked by the processing element.

It should be noted that, for brief description, the foregoing method embodiments are represented as a series of actions. However, a person skilled in the art should know that this application is not limited to the described order of the actions. In addition, a person skilled in the art should also know that all embodiments described in this specification are example embodiments, and the related actions are not necessarily mandatory to this application.

Another appropriate step combination that can be figured out by a person skilled in the art according to the content described above also falls within the protection scope of this application. In addition, a person skilled in the art should also know that all embodiments described in this specification are example embodiments, and the related actions are not necessarily mandatory to this application.

FIG. 6 is a diagram of a structure of a compute device according to an embodiment of this application. As shown in FIG. 6, the compute device 600 includes a processor 601, a memory 602, a communication interface 603, and a bus 604. The processor 601, the memory 602, and the communication interface 603 are coupled through the bus (not marked in the figure). The memory 602 stores instructions. When executable instructions in the memory 602 are executed, the compute device 600 performs the method performed by the compute device in the foregoing method embodiments.

The compute device 600 may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these integrated circuit forms. For another example, when the unit in the apparatus may be implemented by scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

The processor 601 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The memory 602 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 602 stores executable program code, and the processor 601 executes the executable program code to separately implement functions of the foregoing units or modules, so as to implement the foregoing large language model inference method. In other words, the memory 602 stores instructions used to perform the large language model inference method.

The communication interface 603 uses a transceiver module, for example, but not limited to, a network interface card or a transceiver, to implement communication between the compute device 600 and another device or a communication network.

The bus 604 may include a power bus, a control bus, a status signal bus, and the like in addition to a data bus. The bus may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. Buses may be classified into an address bus, a data bus, a control bus, and the like.

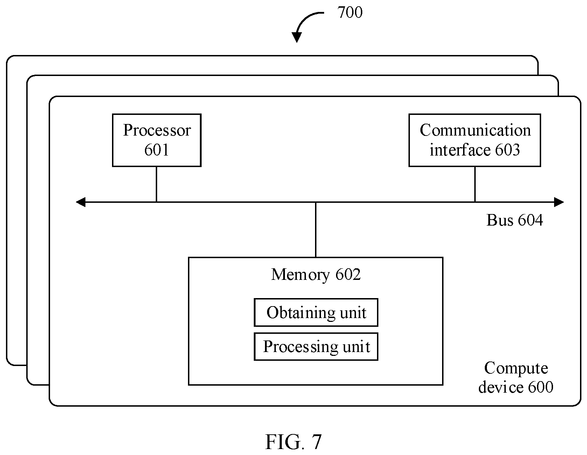

FIG. 7 is a diagram of a compute device cluster according to an embodiment of this application. As shown in FIG. 7, the compute device cluster 700 includes at least one compute device 600.

As shown in FIG. 7, the compute device cluster 700 includes at least one compute device 600. A memory 602 in one or more compute devices 600 in the compute device cluster 700 may store same instructions used to perform the large language model inference method.

In some possible implementations, alternatively, a memory 602 in one or more compute devices 600 in the compute device cluster 700 may separately store some instructions used to perform the large language model inference method. In other words, a combination of one or more compute devices 600 may jointly execute instructions used to perform the large language model inference method.

It should be noted that memories 602 in different compute devices 600 in the compute device cluster 700 may store different instructions respectively used to perform some functions of the large language model inference apparatus. In other words, the instructions stored in the memories 602 in the different compute devices 600 may be used to implement functions of one or more modules in an obtaining unit and a processing unit.

In some possible implementations, the one or more compute devices 600 in the compute device cluster 700 may be connected through a network. The network may be a wide area network, a local area network, or the like.

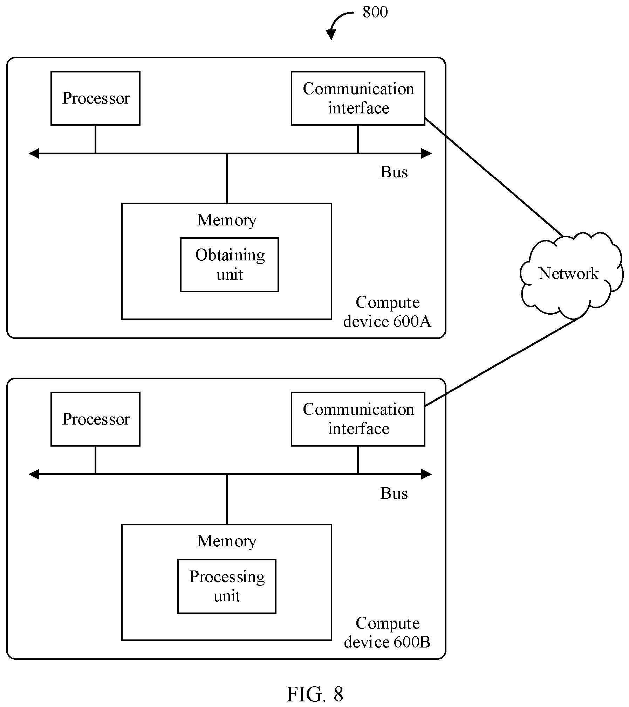

FIG. 8 is a diagram in which computer devices in a computer cluster are connected through a network according to an embodiment of this application. As shown in FIG. 8, two compute devices 600A and 600B are connected through a network. Specifically, each compute device is connected to the network through a communication interface in the compute device.

In a possible implementation, a memory in the compute device 600A stores instructions for performing a function of an obtaining unit. In addition, a memory in the compute device 600B stores instructions for executing functions of a processing unit and a display unit.

It should be understood that, a function of the compute device 600A shown in FIG. 8 may also be completed by a plurality of compute devices 600. Similarly, a function of the compute device 600B may also be completed by a plurality of compute devices.

In another embodiment of this application, a computer-readable storage medium is further provided. The computer-readable storage medium stores computer-executable instructions, and when a processor of a device executes the computer-executable instructions, the device performs the method performed by the compute device in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the compute device in the foregoing method embodiment.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A large language model inference method, comprising:
obtaining input data of a large language model running on a plurality of processors, wherein the input data comprises input text of a user and reference information generated based on the input text, and the reference information comprises domain-specific knowledge corresponding to the input text and time-sensitive information corresponding to the input text;
performing matching with historical key-value cache data in a shared storage pool based on the input data, to determine key-value cache data corresponding to the input data, wherein the historical key-value cache data indicates intermediate data generated by the large language model when processing different historical input data, the shared storage pool is used to store the historical key-value cache data generated by the plurality of processors, and the different historical input data comprises a historical input text and reference information corresponding to the historical input text; and
generating, based on the key-value cache data, an output result corresponding to the input data.

2. The method according to claim 1, wherein the performing matching with the historical key-value cache data in the shared storage pool based on the input data comprises:
segmenting the input data to obtain segmented input data, and determining a universally unique identifier corresponding to the segmented input data; and
performing matching with historical key-value cache data in the shared storage pool based on the universally unique identifier, to determine key-value cache data corresponding to the segmented input data.

3. The method according to claim 2, wherein the generating, based on the key-value cache data, the output result corresponding to the input data comprises:
concatenating the key-value cache data corresponding to the segmented input data, to generate full-segment key-value cache data corresponding to the input data; and
processing, based on the large language model, the full-segment key-value cache data to generate the output result.

4. The method according to claim 3, wherein the full-segment key-value cache data comprises a missing token, and the method further comprises:
filling the missing token based on the historical key-value cache data in the shared storage pool, or computing the missing token based on the large language model.

5. The method according to any one of claims 1 to 4, wherein the method further comprises:
when the historical key-value cache data is not found in the shared storage pool based on the input data, performing inference on the input data based on the large language model, to generate the key-value cache data corresponding to the input data; and
storing the key-value cache data in the shared storage pool.

6. The method according to any one of claims 1 to 5, wherein the historical key-value cache data comprises historical key-value cache data corresponding to historical input texts of different users, historical key-value cache data corresponding to historical input texts at different times, and historical key-value cache data corresponding to historical input texts in different sessions.

7. A large language model inference apparatus, comprising:
an obtaining unit, configured to obtain input data of a large language model running on a plurality of processors, wherein the input data comprises input text of a user and reference information generated based on the input text, and the reference information comprises domain-specific knowledge corresponding to the input text and time-sensitive information corresponding to the input text; and
a processing unit, configured to: perform matching with historical key-value cache data in a shared storage pool based on the input data, to determine key-value cache data corresponding to the input data, wherein the historical key-value cache data indicates intermediate data generated by the large language model when processing different historical input data, the shared storage pool is used to store the historical key-value cache data generated by the plurality of processors, and the different historical input data comprises a historical input text and reference information corresponding to the historical input text, wherein
the processing unit is further configured to generate, based on the key-value cache data, an output result corresponding to the input data.

8. The apparatus according to claim 7, wherein the processing unit is specifically configured to:
segment the input data to obtain segmented input data, and determine a universally unique identifier corresponding to the segmented input data; and
perform matching with historical key-value cache data in the shared storage pool based on the universally unique identifier, to determine key-value cache data corresponding to the segmented input data.

9. The apparatus according to claim 8, wherein the processing unit is specifically configured to:
concatenate the key-value cache data corresponding to the segmented input data, to generate full-segment key-value cache data corresponding to the input data; and
process, based on the large language model, the full-segment key-value cache data to generate the output result.

10. The apparatus according to claim 9, wherein the full-segment key-value cache data comprises a missing token, and the processing unit is further configured to:
fill the missing token based on the historical key-value cache data in the shared storage pool, or compute the missing token based on the large language model.

11. The apparatus according to any one of claims 7 to 10, wherein the processing unit is further configured to:
when the historical key-value cache data is not found in the shared storage pool based on the input data, perform inference on the input data based on the large language model, to generate the key-value cache data corresponding to the input data; and
store the key-value cache data in the shared storage pool.

12. The apparatus according to any one of claims 7 to 11, wherein the historical key-value cache data comprises historical key-value cache data corresponding to historical input texts of different users, historical key-value cache data corresponding to historical input texts at different times, and historical key-value cache data corresponding to historical input texts in different sessions.

13. A compute device, comprising a processor, wherein the processor is coupled to a memory, the processor is configured to store instructions, and when the instructions are executed by the processor, the electronic device is enabled to perform the method according to any one of claims 1 to 6.

14. A compute device cluster, comprising at least one compute device, wherein the compute device comprises a processor, the processor is coupled to a memory, the processor is configured to store instructions, and when the instructions are executed by the processor, the compute device cluster is enabled to perform the method according to any one of claims 1 to 6.

15. A computer-readable storage medium, wherein the computer-readable storage medium stores instructions, and when the instructions are executed, a computer is enabled to perform the method according to any one of claims 1 to 6.

16. A computer program product, wherein the computer program product comprises instructions, and when the instructions are executed, a computer is enabled to implement the method according to any one of claims 1 to 6.
